# EUROPÄISCHE PATENTSCHRIFT

(11) **EP 1 322 085 B1**
(45) Veröffentlichungstag und Bekanntmachung des Hinweises auf die Patenterteilung: **12.07.2006**
(21) Anmeldenummer: 02027979.0
(22) Anmeldetag: 13.12.2002
(51) Int. Cl.: H04L 12/26, H04L 29/06

(54) **Verfahren zur Dienstgüteüberwachung in einem Multimedien paketorientierten Netzwerk**
Method for monitoring the quality of service in a multimedia packet network
Procédé de surveillance de la qualité de service dans un réseau multimédia à commutation de paquets

(30) Priorität: 21.12.2001 DE 10163530
(43) Veröffentlichungstag der Anmeldung: 25.06.2003
(73) Patentinhaber: SIEMENS AKTIENGESELLSCHAFT, 80333 München (DE)
(72) Erfinder: Müller, Harald, Dr., 82205 Gilching (DE); Totzke, Jürgen, 85586 Poing (DE)

(56) Entgegenhaltungen:
- EP-A- 0 948 165
- WO-A-00/33511
- WO-A-01/95053
- DE-A- 4 437 417

## Beschreibung

Ein wesentliches Problem zeitgemäßer VoIP- oder MoIP-Kommunikationssysteme (VoIP: Voice/Video over Internet Protocol; MoIP: Multimedia over Internet Protocol) besteht in der Bereitstellung einer zur Echtzeitkommunikation erforderlichen Dienstgüte (QoS - Quality of Service) in dem zum Datenpakettransport genutzten Kommunikationsnetz. Eine Dienstgütegarantie wird insbesondere dadurch erschwert, dass Infrastruktur, Konfiguration und Lastcharakteristik von IP-Kommunikationsnetzen (IP: Internet Protocol) sehr veränderlich sind.

Um eine ordnungsgemäße Funktionsweise eines VoIP/MoIP-Systems zu gewährleisten, sind in der Regel folgende Entwicklungsschritte erforderlich:
- Netzanalyse bestehender Netze,
- Planung und Dimensionierung des VoIP/MoIP-Netzes (einschließlich Konnektivität, Bandbreite, Routing),
- Dimensionierung von VoIP/MoIP-Dienstklassen, z.B. differenziert nach Übertragungsbandbreite,
- Anpassung der bestehenden Netze bei Änderung von Eingangsparametern, wie z.B. mehr Teilnehmern, neuen Anwendungen, geänderten Verkehrsmustern und
- Netzüberwachung des entworfenen VoIP/MoIP-Systems zum Überprüfen der Konformität mit dem Planungsziel unter Praxisbedingungen.

Die Netzüberwachung gewinnt hierbei zunehmend an Bedeutung, da theoretische Eingangsparameter für die Datenverkehrsplanung dazu neigen, zunehmend komplexer und weniger voraussagbar zu werden. Eine Netzüberwachung erfolgt im Allgemeinen mittels Netzsonden, die vorgegebene Dienstgüteparameter, wie z.B. Laufzeit, Jitter und/oder Paketverluste des IP-Netzes und/oder spezifischer Anwendungen messen.

Die Ergebnisse einer Netzüberwachung können insbesondere benutzt werden:
- zum Überwachen der ordnungsgemäßen Funktionsweise von VoIP/MoIP-Anwendungen,
- zum Erkennen und Lokalisieren von Fehlern und Leistungsverschlechterungen und
- zum Neuauslegen des Netzes (z.B. hinsichtlich Netztopologie, Hinzufügen von Strecken, Bandbreite, Abänderung von Dienstklassen).

Bei einer Inbetriebnahme eines VoIP/MoIP-Kommunikationsnetzes wird üblicherweise vorab eine Netzanalyse mit spezifischen Netzsonden durchgeführt, um zu ermitteln, ob die bestehende IP-Netzinfrastruktur zur Echtzeitkommunikation geeignet ist oder nicht. Die Netzsonden sind dabei an verschiedenen Stellen an das bestehende Kommunikationsnetz anzuschließen. Dies ist jedoch in der Regel sehr kosten- und zeitaufwendig und ist zudem auch mit Sicherheitsrisiken behaftet.

Ein Kommunikationsnetz wird als zur Echtzeitkommunikation geeignet erachtet, wenn vorgegebene Dienstgüte-Schwellwerte z.B. hinsichtlich der Ende-zu-Ende-Paketlaufzeit oder der Paketverluste nicht überschritten werden. Aber selbst wenn sich eine Netzinfrastruktur zum Zeitpunkt der Inbetriebnahme für Echtzeitkommunikation als geeignet erweist, kann sich dies später ändern. In einem solchen Fall ist eine erneute aufwendige Netzanalyse mittels Netzsonden erforderlich

Aus der PCT-Offenlegungsschrift WO 00/33511 ist ein Verfahren zur Dienstgüteüberwachung in einem bestehenden Kommunikationsnetz bekannt, bei dem durch einen Endpunkt einer Verbindung Messdaten über die Dienstgüte einer Verbindung durch einen Endpunkt der Verbindung gesammelt werden und die Messdaten zu einem Server zur Weiterverarbeitung übermittelt werden.

Aus der Offenlegungsschrift DE 4437 417 A1 ist weiterhin ein Verfahren zur Überwachung einer Qualität und zur Beurteilung eines Qualitätszustandes von Digitalsignalverbindungen bekannt.

Es ist Aufgabe der vorliegenden Erfindung, ein weniger aufwendiges Verfahren zur Dienstgüteüberwachung in einem paketorientierten Netzwerk anzugeben.

Gelöst wird diese Aufgabe durch ein Verfahren mit den Merkmalen des Patentanspruchs 1.

Zur Dienstgüteüberwachung in einem paketorientierten Netzwerk werden Messdaten über die Dienstgüte einer Verbindung durch einen Endpunkt der Verbindung innerhalb eines vorgebbaren Zeitintervalls gesammelt. Ein solcher Verbindungsendpunkt kann z.B. ein IP-Telefon, ein VoIP-Client oder ein sog. IP-Gateway sein. Die Messdaten werden zu einer spezifisch für Verbindungen mit dem Endpunkt zuständigen Registrierungseinheit, z.B. einem sog. Gatekeeper oder einem sog. Registrar zur Weiterverarbeitung übermittelt. Die Registrierungseinheit verarbeitet die empfangenen Messdaten zu einem verbindungsspezifischen Dienstgüte-Datensatz und übermittelt den Dienstgüte-Datensatz mit einem um ein Dienstgüte-Informationselement erweiterten, eigentlich zu Abrechnungszwecken vorgesehenen Abrechnungsdatensatz, z.B. einem sog. CDR-Datensatz (CDR: call detail record) zu einer zentralen Nachverarbeitungseinrichtung zur Auswertung.

Vorteilhafterweise kann dann eine Abrechnung der Verbindung anhand des Abrechnungsdatensatzes abhängig von einem darin enthaltenen Dienstgüte-Datensatz erfolgen.

Ein wesentlicher Vorteil der Erfindung besteht darin, dass bestehende Kommunikationskomponenten - z.B. VoIP/MoIP-Endgeräte, Gatekeeper oder Registrar - zur Dienstgüteüberwachung genutzt werden können. Entsprechende Überwachungskomponenten können dazu in potentielle Verbindungsendpunkte integriert werden. Die Messungen können durch die Verbindungsendpunkte während ihres normalen Betriebs ausgeführt werden. Es sind keine zusätzlichen Netzsonden erforderlich. Darüber hinaus kann das Netzwerk vollständig, d.h. in allen für Verbindungen zugänglichen Bereichen durch Messungen abgedeckt werden, was mittels punktuell einzusetzender Netzsonden gemäß dem Stand der Technik nicht realisierbar ist.

Vorteilhafte Ausführungsformen und Weiterbildungen der Erfindung sind in den abhängigen Ansprüchen angegeben.

Nach einer vorteilhaften Ausführungsform der Erfindung können aktuelle Dienstgüte-Messdaten in regelmäßigen Zeitabständen vom Endpunkt zur Registrierungseinheit übermittelt werden. Die Zeitabstände können dabei durch eine zum Endpunkt übermittelte RAS-ACF-Meldung gemäß der ITU-T-Empfehlung H.225 (RAS: Registration Access Status, ACF: Admission Confirm) vorgegeben werden.

Vorzugsweise können bestehende Meldungen erweitert werden, um die Dienstgüte-Messdaten zu übermitteln. So können insbesondere in Kommunikationssystemen gemäß der ITU-T-Empfehlung H.323 die Messdaten innerhalb einer um ein spezifisches Informationselement ergänzten RAS-IRR-Meldung gemäß der ITU-T-Empfehlung H.225 (RAS: Registration Access Status, IRR: Information Request Response) übermittelt werden. Vorzugsweise kann eine solche erweiterte RAS-IRR-Meldung nach ihrer Anforderung durch eine RAS-ACF-Meldung periodisch gesendet werden. Weiterhin können die Messdaten beim Abbau der Verbindung innerhalb einer um ein spezifisches Informationselement ergänzten RAS-DRQ-Meldung gemäß der ITU-T-Empfehlung H.225 (RAS: Registration Access Status, DRQ: Disengage Request) übermittelt werden.

Vorzugsweise können die Messdaten mittels des sog. RTCP-Protokolls (RTCP: Real Time Control Protocol) gemäß IETF-Standard ermittelt werden. Das RTCP-Protokoll kann dazu in einem jeweiligen Verbindungsendpunkt implementiert werden.

Weiterhin kann die Registrierungseinheit eine den Endpunkt eindeutig identifizierende Ursprungskennung und/oder eine einen Verbindungspartner des Endpunktes eindeutig identifizierende Kennung ermitteln und die Ursprungskennung bzw. die Verbindungspartner-Kennung mit den empfangenen Messdaten an eine zentrale Dienstgüteüberwachungseinheit zur Auswertung übermitteln. Auf diese Weise können durch die Dienstgüteüberwachungseinheit endpunktspezifische Dienstgüteprofile erstellt werden. Die zentrale Dienstgüteüberwachungseinheit kann die empfangenen Messdaten in einer Datenbank für eine nachfolgende Auswertung, insbesondere statistische Auswertung speichern.

Der Verbindungsendpunkt kann die Messdaten innerhalb eines Zeitintervalls von z.B. 3-5 Sekunden ermitteln und sammeln, und sie zur Registrierungseinheit übermitteln. Die Zeitabstände, in denen aktuelle Messdaten über die Dienstgüte vom Endpunkt zur Registrierungseinheit übermittelt werden, können vorzugsweise durch die Registrierungseinheit und/oder die Dienstgüteüberwachungseinheit vorgegeben werden. Zur Überwachung einer ausgewählten Verbindung kann vor dem Aufbau der Verbindung per Administration ein kürzeres Zeitintervall, z.B. 1 Sekunde vorgegeben werden.

Die Registrierungseinheit und die Dienstgüteüberwachungseinheit erlauben es, die Dienstgüteüberwachung auf logische Schichten aufzuteilen. So kann die Registrierungseinheit einen Kurzbericht, z.B. mit Mindest-, Mittel- und Maximalwerten von Dienstgüteparametern, in einem CDR-Datensatz zusammenstellen, um die vom Benutzer wahrgenommene Dienstgüte zu registrieren. Der CDR-Datensatz kann dann durch die Dienstgüteüberwachungseinheit oder durch die Nachverarbeitungseinrichtung abgerufen werden oder kann als Grundlage für Gebührenberechnungsverfahren dienen.

Wahlweise können die Dienstgüte-Messdaten von der Registrierungseinheit zu einer Dienstgüteüberwachungseinheit weitergeleitet werden, die in der Lage ist, große Mengen von Berichten zu speichern und anspruchsvolle Statistiken, Graphen und Funktionen zu realisieren. Durch eine solche Dienstgüteüberwachungseinheit können beispielsweise rufspezifische Dienstgüteprofile oder Tageszeitstatistiken erstellt, Dienstgüte-Engpässe gekennzeichnet und/oder Online-Leistungsbewertungen mit einer Alarmierung beim Erreichen vordefinierter Schwellwerte durchgeführt werden. In policy-basierten IP-Netzen kann die Dienstgüteüberwachungseinheit mit einem Policy-Manager der Netzelemente oder direkt mit den Netzelementen interagieren und beispielsweise Dienstgüteprofile oder Tageszeit-Dienstgüteprofile einstellen.

Die Erfindung lässt sich auch auf Kommunikationsnetze gemäß dem IETF-Standard SIP (Session Initiation Protocol) anwenden. In solchen Kommunikationsnetzen können den H.225-RAS-Meldungen ACF, IRR und DRQ entsprechende Meldungen zur Datenübermittlung zwischen Endpunkt und Registrierungseinheit bzw. zwischen Registrierungseinheit und Dienstgüteüberwachungseinheit bzw. zentraler Nachverarbeitungseinrichtung vorgesehen werden. Die Meldungen können hierbei analog zu den ACF-, IRR- und DRQ-Meldungen um spezifische Informationselemente zum Transport der Messdaten erweitert sein. In einem SIP-Kommunikationssystemen kann als Registrierungseinheit ein sog. Authentifizierungsserver oder Registrar genutzt werden. Dieser kann Dienstgüte-Datensätze an eine Dienstgüteüberwachungseinheit oder eine zentrale Nachverarbeitungseinrichtung weiterleiten.

Die Erfindung lässt sich aufgrund der vorteilhaften Aufteilung der Dienstgüteüberwachung auf Endpunkte, Registrierungseinheiten und gegebenenfalls zentrale Nachverarbeitungseinrichtungen oder Dienstgüteüberwachungseinrichtungen leicht an unterschiedliche Kundenbedürfnisse anpassen. So können gemäß einer einfacheren Implementierungsvariante nur verbindungsindividuelle summarische Berichte und gemäß einer aufwendigeren Implementierungsvariante eine anspruchsvolle Berichterstattung mit zugeordneter Dienstmanagementanwendung sowie gegebenenfalls eine Interaktion mit einem policy-basierten Netzwerk vorgesehen werden.

Ein Ausführungsbeispiel der Erfindung wird nachfolgend anhand der Zeichnung näher erläutert.

Dabei zeigen jeweils in schematischer Darstellung:
Figur 1 ein VoIP-Kommunikationsnetz,
Figur 2 einen Signalisierungsablauf beim Einleiten eines Dienstgüteüberwachungsvorgangs,
Figur 3 einen Signalisierungsablauf beim Übermitteln von Dienstgüte-Messdaten zu Registrierungseinheiten,
Figur 4 einen Signalisierungsablauf beim Übermitteln von Dienstgüte-Datensätzen zu einer zentralen CDR-Nachverarbeitungseinrichtung und
Figur 5 einen Signalisierungsablauf beim Übermitteln von Dienstgüte-Messdaten zu einer zentralen Dienstgüteüberwachungseinheit.

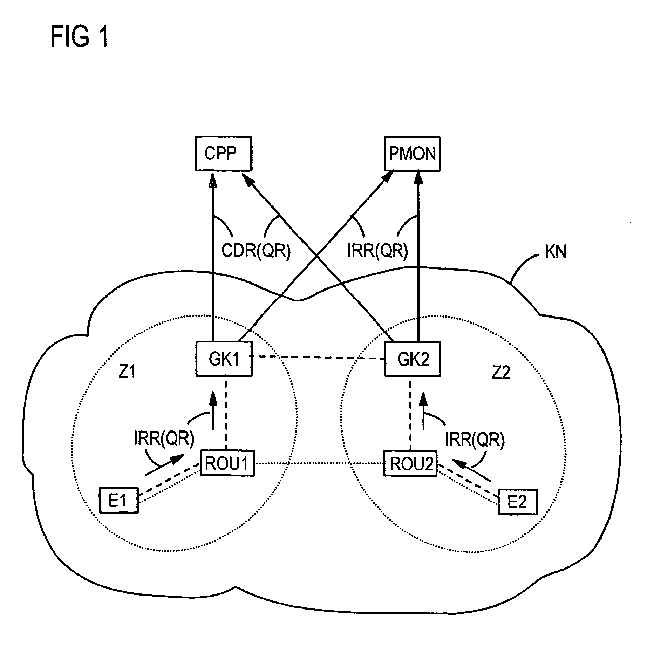

**Figur 1** zeigt in schematischer Darstellung ein VoIP-Kommunikationsnetz KN gemäß der ITU-T-Empfehlung H.323 mit einer typischen Bezugskonfiguration zur Durchführung des erfindungsgemäßen Verfahrens. Das Kommunikationsnetz KN umfasst zwei sogenannte Gatekeeperzonen Z1 und Z2. Die Gatekeeperzone Z1 weist hierbei ein VoIP-Endgerät E1, einen Router ROU1 sowie einen Gatekeeper GK1 gemäß der H.323-Empfehlung als Registrierungseinheit auf, der spezifisch für Verbindungen zu Endeinrichtungen, hier E1, innerhalb der Gatekeeperzone Z1 zuständig ist. Analog dazu weist die Gatekeeperzone Z2 ein VoIP-Endgerät E2, einen Router ROU2 sowie einen Gatekeeper GK2 als Registrierungseinheit auf, der spezifisch für Verbindungen zu Endeinrichtungen, hier E2, innerhalb der Gatekeeperzone Z2 zuständig ist.

Weiterhin sind dem Kommunikationsnetz KN eine zentrale CDR-Nachverarbeitungseinrichtung CPP (CDR Post-processing Unit; CDR: call detail record) sowie eine zentrale Dienstgüteüberwachungseinheit PMON (Performance Monitoring Unit) zugeordnet. Die CDR-Nachverarbeitungseinrichtung CPP dient eigentlich zur Verarbeitung von CDR-Abrechungsdatensätzen und kann erfindungsgemäß zu einer mit wenig Zusatzaufwand verbundenen Dienstgüteüberwachung eingesetzt werden. Gegenüber der CDR-Nachverarbeitungseinrichtung CPP erlaubt die spezifisch für die Dientgüteüberwachung eingesetzte Dienstgüteüberwachungseinheit PMON eine eingehendere Auswertung, Analyse und Überwachung der Dienstgüte.

Nach einer alternativen Ausführungsform könnte das Kommunikationsnetz KN gemäß dem SIP-Standard ausgestaltet sein. In einem solchen Fall könnten anstelle der Gatekeeper GK1 und GK2 SIP-Authentifizierungsserver oder SIP-Registrare als Registrierungseinheiten verwendet werden.

Im Folgenden wird ein Aufbau einer VoIP-Verbindung zwischen den Endgeräten E1 und E2 betrachtet. Eine zugehörige Verbindungssignalisierung erfolgt gemäß H.323-Empfehlung über die Gatekeeper GK1 und GK2. Im vorliegenden Fall verläuft die Verbindungssignalisierung, wie in Figur 1 durch strichlierte Linien angedeutet, vom Endgerät E1 über den Router ROU1, den Gatekeeper GK1, den Gatekeeper GK2 und den Router ROU2 zum Endgerät E2. Diese Art der Signalisierungsführung über Gatekeeper wird häufig auch als "gatekeeper routed model" bezeichnet. Im Rahmen der Verbindungssignalisierung werden zwischen dem Endgerät E1 und dem Gatekeeper GK1 sowie zwischen dem Endgerät E2 und dem Gatekeeper GK2 RAS-Meldungen (Registration Access Status) gemäß ITU-T-Empfehlung H.225 ausgetauscht.

Wie in Figur 1 durch punktierte Linien angedeutet, werden die im Rahmen der VoIP-Verbindung zu übertragenden Nutzdaten, z.B. Sprach-, Video- und/oder Multimediadaten, von den Routern ROU1 und ROU2 direkt zwischen den Verbindungsendpunkten E1 und E2 vermittelt.

Erfindungsgemäß werden durch die Verbindungsendpunkte E1 und E2 Messdaten QR über verschiedene Dienstgüteparameter der Verbindung, wie z.B. Ende-zu-Ende-Paketlaufzeit, Jitter und/oder Paketverluste, erfasst und innerhalb eines vorgegebenen Zeitintervalls von z.B. 3-5s gesammelt. Die Erfassung der Messdaten QR erfolgt dabei anhand von RTCP-Rückmeldeinformationen eines in den Endgeräten E1 und E2 implementierten RTCP-Protokolls (Real-Time Control Protocol). Die durch ein jeweiliges Endgerät E1 bzw. E2 gesammelten Dienstgüte-Messdaten QR werden nach Ablauf eines jeweiligen Zeitintervalls innerhalb einer um ein entsprechendes Informationselement erweiterten RAS-IRR-Meldung IRR (Information Request Response) gemäß H.225-Empfehlung zum jeweils für das Endgerät E1 bzw. E2 zuständigen Gatekeeper GK1 bzw. GK2 übertragen.

Die Gatekeeper GK1 und GK2 können die empfangenen RAS-IRR-Meldungen IRR, gegebenenfalls erweitert um eine Kennungsinformation zur zentralen Dienstgüteüberwachungseinheit PMON weiterleiten.

Alternativ oder zusätzlich können die Gatekeeper GK1 und GK2 die mit den RAS-IRR-Meldungen IRR empfangenen Dienstgüte-Messdaten QR zu einem Dienstgüte-Datensatz verarbeiten, der mit einem um ein Dienstgüte-Informationelement erweiterten CDR-Abrechnungsdatensatz CDR zur CDR-Nachverarbeitungseinrichtung CPP übermittelt wird. Die Übermittlung kann hierbei fortlaufend oder im Stapelbetrieb (batch mode) erfolgen. Bis zur Übermittlung der CDR-Datensätze kann ein jeweiliger Gatekeeper GK1 bzw. GK2 bereits eine Vorverarbeitung der Dienstgüte-Messdaten QR vornehmen. Von der CDR-Nachverarbeitungseinrichtung CPP können die CDR-Datensätze CDR einschließlich der verbindungsspezifischen Dienstgüte-Messdaten QR abgerufen werden. Zusätzlich können durch die CDR-Nachverarbeitungseinrichtung CPP einfache Dienstgüte-Statistiken erstellt werden.

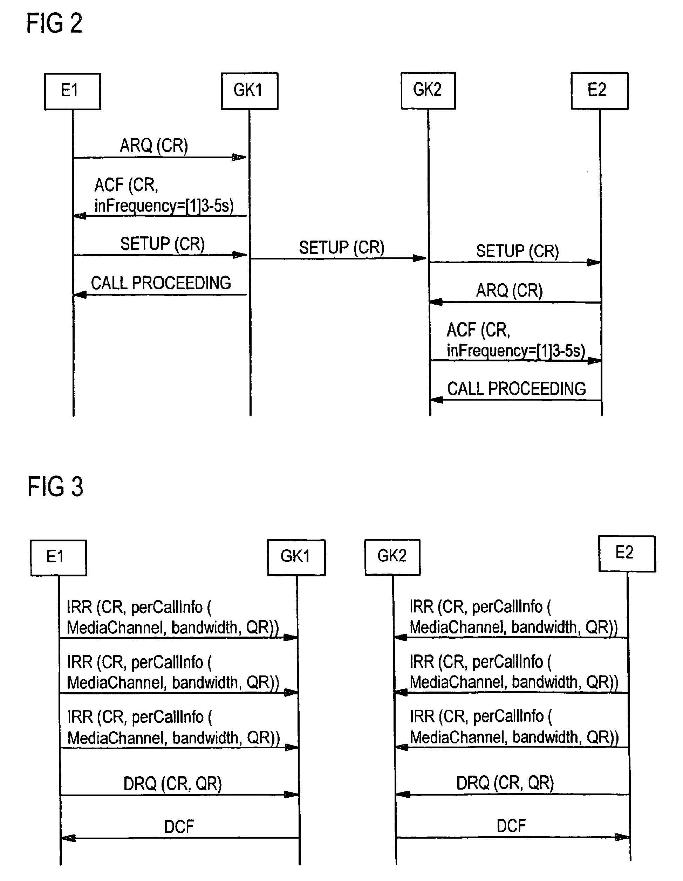

**Figur 2** zeigt den Signalisierungsablauf beim Einleiten eines Dienstgüteüberwachungsvorgangs in schematischer Darstellung. Zur Initialisierung des Aufbaus der VoIP-Verbindung übermittelt das Endgerät E1 eine RAS-ARQ-Meldung ARQ (Admission Request) gemäß H.225-Empfehlung als Zugangsanforderungsmeldung zum Gaktekeeper GK1, der infolgedessen eine RAS-ACF-Meldung ACF (Admission Confirm) gemäß H.225-Empfehlung als Zugangsbestätigungsmeldung zum Endgerät E1 rückübermittelt. Beide Meldungen enthalten einen sog. Call-Reference-Value CR der diese Meldungen der aufzubauenden VoIP-Verbindung zuordnet.

Mit der RAS-ACF-Meldung ACF wird eine Zeitinformation inFrequency zum Endgerät E1 übertragen. Durch die RAS-ACF-Meldung ACF wird das Endgerät E1 zum periodischen Senden von RAS-IRR-Meldungen IRR an den Gatekeeper GK1 veranlasst, wobei die Zeitabstände der zu sendenden RAS-IRR-Meldungen IRR durch die Zeitinformation inFrequency vorgegeben werden. Damit wird auch die Länge des jeweiligen Zeitintervalls, in dem die Dienstgüte-Messdaten QR vom Endgerät E1 zu sammeln sind, vorgegeben. Die Zeitabstände sollten vorzugsweise nicht weniger als 3-5 Sekunden betragen, um die Netzbelastung nicht wesentlich zu erhöhen. Für verbindungsindividuelle Messungen können auch kleinere Zeitabstände, z.B. 500ms - 1s vorgesehen sein.

Nach Empfang der RAS-ACF-Meldung ACF überträgt das Endgerät E1 eine Verbindungsaufbaumeldung SETUP mit Call-Reference-Value CR über die Gatekeeper GK1 und GK2 zum Zielendgerät E2. Dieses Übermittelt daraufhin eine RAS-ARQ-Meldung ARQ zum Gatekeeper GK2, der mit einer RAS-ACF-Meldung ACF antwortet. Durch eine in der RAS-ACF-Meldung ACF enthaltene Zeitinformation inFrequency wird das Endgerät E2 analog zum Endgerät E1 zum periodischen Senden von RAS-IRR-Meldungen IRR an den Gatekeeper GK2 veranlasst.

Durch Rückübermittlung einer jeweiligen Call-Proceeding-Meldung vom Gatekeeper GK1 zum Endgerät E1 sowie vom Endgerät E2 zum Gatekeeper GK2 wird der Verbindungsaufbau fortgesetzt.

**Figur 3** zeigt den Signalisierungsablauf beim Übermitteln der Dienstgüte-Messdaten QR zu den Gatekeepern GK1 und GK2 in schematischer Darstellung. Die Dienstgüte-Messdaten QR werden in periodischen Zeitabständen innerhalb der RAS-IRR-Meldungen IRR vom Endgerät E1 zum Gatekeeper GK1 und vom Endgerät E2 zum Gatekeeper GK2 übermittelt. Die RAS-IRR-Meldungen IRR enthalten jeweils neben dem Call-Reference-Value CR ein sogenanntes perCallInfo-Informationselement, das eine Medienkanal-Information MediaChannel, eine Bandbreiteninformation bandwidth sowie die jeweiligen Dienstgüte-Messdaten QR umfasst. Die Dienstgüte-Messdaten QR enthalten vorzugsweise u.A. Mindest-, Durchschnitts- und/oder Maximal-Werte von Dienstgüte-Parametern, die durch Empfang und Auswertung von RTCP-Rückmeldungen während der durch die RAS-ACF-Meldungen ACF vorgegebenen Beobachtungszeit durch das jeweilige Endgerät E1 bzw. E2 ermittelt wurden.

Beim Abbau der VoIP-Verbindung werden schließlich abschließende Dienstgüte-Messdatensätze QR über eine letzte Beobachtungszeit innerhalb von um ein entsprechendes Informationselement erweiterten RAS-DRQ-Meldungen DRQ (Disengage Request) gemäß H.225-Empfehlung von den Endgeräten E1 und E2 zu den Gatekeepern GK1 und GK2 übermittelt. Die RAS-DRQ-Meldungen DRQ werden jeweils durch eine RAS-DCF-Meldung DCF (Disengage Confirm) beantwortet.

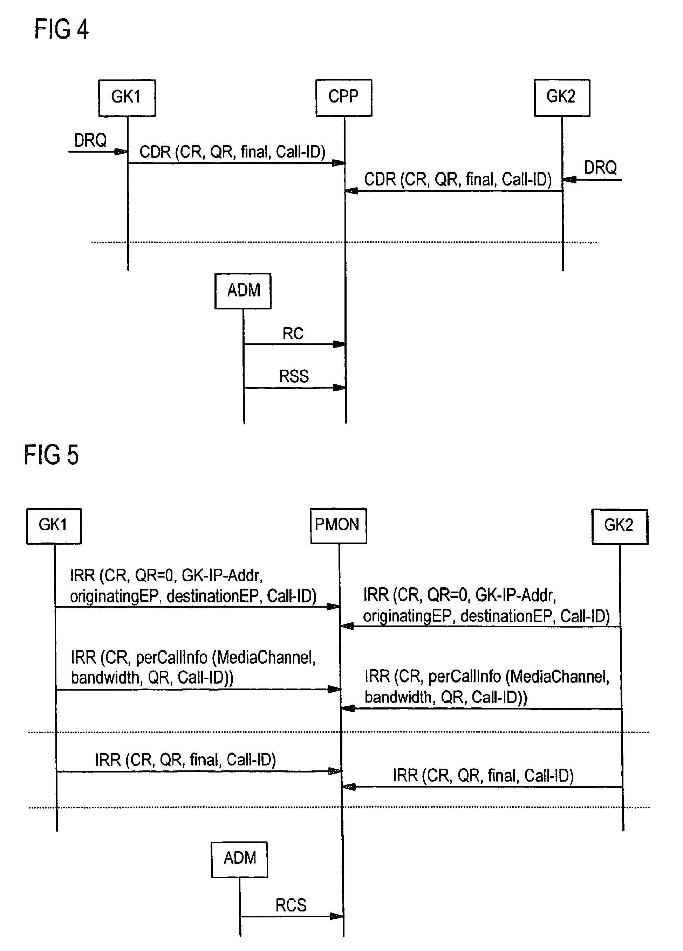

**Figur 4** zeigt den Signalisierungsablauf beim Übermitteln der CDR-Datensätze CDR zur zentralen CDR-Nachverarbeitungseinrichtung CPP in schematischer Darstellung. Die CDR-Datensätze CDR werden durch die Gaktekeeper GK1 und GK2 jeweils nach Empfang der RAS-DRQ-Meldung DRQ zur zentralen CDR-Nachverarbeitungseinrichtung CPP übertragen. Die CDR-Datensätze CDR enthalten jeweils Dienstgüte-Messdaten QR, gegebenenfalls in Form von durch den Gatekeeper GK1 bzw. GK2 vorverarbeiteten Dienstgüte-Datensätzen, sowie den Call-Reference-Value CR, eine Abschlussinformation final und eine Rufkennung Call-ID. Anhand der Rufkennung Call-ID können alle empfangenen CDR-Datensätze CDR durch die zentralen CDR-Nachverarbeitungseinrichtung CPP verbindungsspezifisch abgespeichert und/oder nachverarbeitet werden.

Die von der CDR-Nachverarbeitungseinrichtung CPP für eine Vielzahl von VoIP-Verbindungen gesammelten CDR-Datensätze CDR können dann durch eine Administrationseinheit ADM z.B. mittels einfacher CDR-Abrufmeldungen RC abgerufen werden. Darüber hinaus kann auch vorgesehen sein, durch die Administrationseinheit ADM mittels differenzierter Auslesemeldungen RSS einfache Dienstgütestatistiken auszulesen, die auf den angesammelten Dienstgüte-Messdaten QR basieren.

**Figur 5** zeigt schließlich den Signalisierungsablauf beim Übermitteln der Dienstgüte-Messdaten QR zur zentralen Dienstgüteüberwachungseinheit PMON in schematischer Darstellung. Durch die dedizierte Dienstgüteüberwachungseinheit PMON können auch sehr aufwendige Dienstgüte-Überwachungsfunktionen bereitgestellt werden.

Die von den Gatekeepern GK1 und GK2 empfangenen Dienstgüte-Messdaten QR werden - gegebenenfalls nach Vorverarbeitung - von den Gatekeepern GK1 und GK2 innerhalb von RAS-IRR-Meldungen IRR zur Dienstgüteüberwachungseinheit PMON weitergeleitet. Hierbei wird zur Initialisierung zunächst jeweils eine erste RAS-IRR-Meldung IRR mit einem leerem Messdatenfeld (QR=0), dem Call-Reference-Value CR, der IP-Adresse GK-IP-Addr des jeweiligen Gatekeepers GK1 bzw. GK2, einer Kennung originatingEP des die VoIP-Verbindung initiierenden Verbindungsendpunkts E1, einer Kennung destinationEP des Verbindungsziels E2 sowie der Rufkennung Call-ID übertragen. Die eigentlichen Dienstgüte-Messdaten QR werden dann innerhalb nachfolgender RAS-IRR-Meldungen IRR übermittelt. Diese entgender RAS-IRR-Meldungen IRR übermittelt. Diese enthalten neben dem Call-Reference-Value CR ein perCallInfo-Informationselement, das eine Medienkanal-Information MediaChannel, eine Bandbreiteninformation bandwidth sowie die Dienstgüte-Messdaten QR umfasst. Beim Abbau der VoIP-Verbindung werden schließlich RAS-IRR-Meldungen IRR mit Call-Reference-Value CR, abschließenden Dienstgüte-Messdatensätzen QR über eine letzte Beobachtungszeit, einer Abschlussinformation final sowie der Rufkennung Call-ID übertragen

Die von der zentralen Dienstgüteüberwachungseinheit PMON für eine Vielzahl von VoIP-Verbindungen gesammelten Dienstgüte-Messdaten QR können durch die Dienstgüteüberwachungseinheit PMON zu aufwendigen Statistiken, wie z.B. Dienstgüte-Verbindungsprofilen, Tageszeitprofilen und/oder netztopologiebezogenen Profilen, oder zu Schwellwertdefinitionen für eine Alarmierung verarbeitet werden. Die erstellten Statistiken können dann durch eine Administrationseinheit ADM mittels entsprechender Auslesemeldungen RCS abgerufen werden.

Anhand von Statistikinformationen, wie z.B. Topologie- und Tageszeitprofilen, kann ein Zusammenwirken mit Policy-Managern oder einem Policy-Management in Netzelementen wesentlich verbessert werden. So können Netzbetriebsmittel annähernd in Echtzeit den aktuellen Verkehrsbedürfnissen von Multimedia-Netzbenutzern zugewiesen und an sie angepasst werden.

## Patentansprüche

1. Verfahren zur Dienstgüteüberwachung in einem paketorientierten Netzwerk (KN), wobei
durch einen Endpunkt (E1, E2) einer Verbindung Messdaten (QR) über die Dienstgüte der Verbindung innerhalb eines vorgebbaren Zeitintervalls gesammelt werden und
die Messdaten (QR) zu einer spezifisch für Verbindungen mit dem Endpunkt (E1, E2) zuständigen Registrierungseinheit (GK1, GK2) zur Weiterverarbeitung übermittelt werden,
**dadurch gekennzeichnet,**
**dass** die Registrierungseinheit (GK1, GK2) die empfangenen Messdaten (QRF) zu einem verbindungsspezifischen Dienstgüte-Datensatz verarbeitet und den Dienstgüte-Datensatz mit einem um ein Dienstgüte-Informationselement erweiterten Abrechnungsdatensatz (CDR) zu einer zentralen Nachverarbeitungseinrichtung (CPP) zur Auswertung übermittelt.

2. Verfahren nach Anspruch 1,
**dadurch gekennzeichnet,**
**dass** in regelmäßigen Zeitabständen aktuelle Messdaten (QR) über die Dienstgüte vom Endpunkt zur Registrierungseinheit (GK1, GK2) übermittelt werden.

3. Verfahren nach Anspruch 2,
**dadurch gekennzeichnet,**
**dass** die Zeitabstände durch eine zum Endpunkt (E1, E2) übermittelte RAS-ACF-Meldung (ACF) gemäß der ITU-T-Empfehlung H.225 vorgegeben werden.

4. Verfahren nach einem der vorhergehenden Ansprüche,
**dadurch gekennzeichnet,**
**dass** die Messdaten (QR) innerhalb einer um ein spezifisches Informationselement ergänzten RAS-IRR-Meldung (IRR) gemäß der ITU-T-Empfehlung H.225 übermittelt werden.

5. Verfahren nach einem der vorhergehenden Ansprüche,
**dadurch gekennzeichnet,**
**dass** die Messdaten (QR) beim Abbau der Verbindung innerhalb einer um ein spezifisches Informationselement ergänzten RAS-DRQ-Meldung (DRQ) gemäß der ITU-T-Empfehlung H.225 übermittelt werden.

6. Verfahren nach einem der vorhergehenden Ansprüche,
**dadurch gekennzeichnet,**
**dass** der Abrechnungsdatensatz (CDR) durch einen sogenannten CDR-Datensatz realisiert ist.

7. Verfahren nach einem der vorhergehenden Ansprüche,
**dadurch gekennzeichnet,**
**dass** eine Abrechnung der Verbindung anhand des Abrechnungsdatensatzes (CDR) abhängig von dem darin enthaltenen Dienstgüte-Datensatz erfolgt.

8. Verfahren nach einem der vorhergehenden Ansprüche,
**dadurch gekennzeichnet,**
**dass** die Messdaten (QR) mittels des sogenannten RTCP-Protokolls gemäß IETF-Standard ermittelt werden.

9. Verfahren nach einem der vorhergehenden Ansprüche,
**dadurch gekennzeichnet,**
**dass** die Registrierungseinheit (GK1, GK2) eine den Endpunkt (E1, E2) im Netzwerk (KN) eindeutig identifizierende Ursprungskennung (originatingEP) ermittelt und die Ursprungskennung (originatingEP) mit den empfangenen Messdaten (QR) an eine zentrale Dienstgüteüberwachungseinheit (PMON) zur Auswertung übermittelt.

10. Verfahren nach einem der vorhergehenden Ansprüche,
**dadurch gekennzeichnet,**
**dass** die Registrierungseinheit (GK1, GK2) eine einen Verbindungspartner des Endpunkts (E1, E2) im Netzwerk (NK) eindeutig identifizierende Kennung (destinationEP) ermittelt und
die Kennung (destinationEP) mit den empfangenen Messdaten (QR) an eine zentrale Dienstgüteüberwachungseinheit (PMON) zur Auswertung übermittelt.

11. Verfahren nach Anspruch 9 oder 10,
**dadurch gekennzeichnet,**
**dass** die zentrale Dienstgüteüberwachungseinheit (PMON) die empfangenen Messdaten (QR) in einer Datenbank für eine nachfolgende Auswertung, insbesondere statistische Auswertung speichert.

## Claims

1. Method for monitoring the quality of service of a connection in a packet-oriented network, with
measurement data (QR) on the quality of service being collected by an endpoint (E1, E2) of the connection within a time interval which can be predetermined and
the measurement data (QR) being sent for subsequent processing to a registration unit (GK1, GK2) specifically responsible for connections with the endpoint (E1, E2).
**characterized in that**
the registration unit (GK1, GK2) processes the received measurement data (QRF) into a connection-specific quality-of-service data record and transfers the quality-of-service data record with a call detail record (CDR) expanded by a quality-of-service information element to a central post-processing device (CPP) for evaluation

2. Method according to claim 1,
**characterized in that**
current measurement data (QR) on the quality of service is sent at regular intervals from the endpoint to the registration unit (GK1, GK2).

3. Method according to claim 2,
**characterized in that**
the time intervals are preset by an RAS-ACF message (ACF) sent to the endpoint (E1, E2) in accordance with ITU-T Recommendation H.225.

4. Method according to one of the preceding claims,
**characterized in that**
the measurement data (QR) is sent within an RAS-IRR message (IRR) expanded by a specific information element in accordance with ITU-T Recommendation H.225.

5. Method according to one of the preceding claims,
**characterized in that**
when the connection is cleared down the measurement data (QR) is sent within an RAS-DRQ message (DRQ) expanded by a specific information element in accordance with ITU-T Recommendation H.225.

6. Method according to one of the preceding claims,
**characterized in that**
the call detail record (CDR) is implemented by a CDR (call detail record) data record.

7. Method according to one of the preceding claims,
**characterized in that**
the connection is billed on the basis of the call detail record (CDR) depending on the quality-of-service data record contained therein.

8. Method according to one of the preceding claims,
**characterized in that**
the measurement data (QR) is determined in accordance with the IETF standard by means of the RTCP protocol.

9. Method according to one of the preceding claims,
**characterized in that**
the registration unit (GK1, GK2) determines an origin ID (originatingEP) unambiguously identifying the endpoint (E1, E2) in the network (KN) and the origin ID (originatingEP) is sent with the received measurement data (QR) to a central performance monitoring unit (PMON) for evaluation.

10. Method according to one of the preceding claims,
**characterized in that**
the registration unit (GK1, GK2) determines an ID (destinationEP) unambiguously identifying a connection partner of the endpoint (E1, E2) in the network (KN) and the ID (destinationEP) is sent with the received measurement data (QR) to a central performance monitoring unit (PMON) for evaluation.

11. Method according to claim 9 or 10,
**characterized in that**
the central performance monitoring unit (PMON) stores the received measurement data (QR) in a database for subsequent evaluation, in particular statistical evaluation.

## Revendications

1. Procédé pour la surveillance de qualité de service dans un réseau (KN) orienté paquet,
des données de mesure (QR) relatives à la qualité de service de la liaison étant collectées à l'intérieur d'un intervalle de temps prédéfinissable par un point d'extrémité (E1, E2) d'une liaison et
les données de mesure (QR) étant transmises à une unité d'enregistrement (GK1, GK2) compétente de façon spécifique pour des liaisons avec le point d'extrémité (E1, E2) pour le traitement ultérieur,
**caractérisé en ce que**
l'unité d'enregistrement (GK1, GK2) traite les données de mesure (QRF) reçues pour avoir un ensemble de données de qualité de service spécifique à la liaison et transmet l'ensemble de données de qualité de service avec un ensemble de données de facturation (CDR) complété par un élément d'information de qualité de service à un dispositif central de traitement ultérieur (CPP) pour l'analyse.

2. Procédé selon la revendication 1,
**caractérisé en ce que**
des données de mesure (QR) actuelles concernant la qualité de service sont transmises à des intervalles réguliers du point d'extrémité à l'unité d'enregistrement (GK1, GK2).

3. Procédé selon la revendication 2,
**caractérisé en ce que**
les intervalles de temps sont prédéfinis par un message de RAS-ACF (ACF) transmis au point d'extrémité (E1, E2) selon la recommandation de ITU-T H.225.

4. Procédé selon l'une quelconque des revendications précédentes,
**caractérisé en ce que**
les données de mesure (QR) sont transmises à l'intérieur d'un message de RAS-IRR (IRR) complété par un élément d'information spécifique selon la recommandation de ITU-T H.225.

5. Procédé selon l'une quelconque des revendications précédentes,
**caractérisé en ce que**
les données de mesure (QR) sont transmises lors de la déconnexion de la liaison à l'intérieur d'un message de RAS-DRQ (DRQ) complété par un élément d'information spécifique selon la recommandation de ITU-T H.225.

6. Procédé selon l'une quelconque des revendications précédentes,
**caractérisé en ce que**
l'ensemble de données de facturation (CDR) est réalisé par un ensemble de données CDR.

7. Procédé selon l'une quelconque des revendications précédentes,
**caractérisé en ce que**
une facturation de la liaison s'effectue à l'aide de l'ensemble de données de facturation (CDR) en fonction de l'ensemble de données de qualité de service inclus dedans.

8. Procédé selon l'une quelconque des revendications précédentes,
**caractérisé en ce que**
les données de mesure (QR) sont déterminées au moyen du protocole RTCP selon le standard IETF.

9. Procédé selon l'une quelconque des revendications précédentes,
**caractérisé en ce que**
l'unité d'enregistrement (GK1, GK2) détermine un code d'origine (originatingEP) identifiant univoquement le point d'extrémité (E1, E2) dans le réseau (KN) et transmet le code d'origine (originatingEP) avec les données de mesure reçues (QR) à une unité centrale de surveillance de qualité de service (PMON) pour l'analyse.

10. Procédé selon l'une quelconque des revendications précédentes,
**caractérisé en ce que**
l'unité d'enregistrement (GK1, GK2) détermine un code (destinationEP) identifiant univoquement un partenaire de liaison du point d'extrémité (E1, E2) dans le réseau (KN) et transmet le code (destinationEP) avec les données de mesure (QR) reçues à une unité centrale de surveillance de qualité de service (PMON) pour l'analyse.

11. Procédé selon la revendication 9 ou 10,
**caractérisé en ce que**
l'unité centrale de surveillance de qualité de service (PMON) mémorise les données de mesure (QR) reçues dans une banque de données pour une analyse ultérieure, en particulier une analyse statistique.
